# FASCICULE DE BREVET EUROPEEN

(11) **EP 2 528 873 B1**
(45) Date de publication et mention de la délivrance du brevet: **10.05.2017**
(21) Numéro de dépôt: 11705268.8
(22) Date de dépôt: 28.01.2011
(51) Int. Cl.: C03B 5/43, C04B 35/109, C04B 35/48, C04B 35/484, C04B 35/653, C04B 35/657

(54) **PRODUIT REFRACTAIRE A FORTE TENEUR ZIRCONE**
FEUERFESTES PRODUKT MIT HOHEM GEHALT AN ZIRKONOXYD
ZIRCONIA-BASED REFRACTORY PRODUCT

(30) Priorité: 28.01.2010 FR 1050600
(43) Date de publication de la demande: 05.12.2012
(73) Titulaire: Saint-Gobain Centre de Recherches et d'Etudes Européen, 92400 Courbevoie (FR)
(72) Inventeur: CABODI, Isabelle, F-84300 Cavaillon (FR); GAUBIL, Michel, F-30133 Les Angles (FR)
(74) Mandataire: Nony
(86) Numéro de dépôt international: PCT/IB2011/050389
(87) Numéro de publication internationale: WO 2011/092658

(56) Documents cités:
- WO-A2-2007/099253
- WO-A2-2008/113949
- WO-A2-2009/027610
- FR-A1- 2 897 861
- FR-A1- 2 897 862

## Description

### Domaine technique

L'invention concerne un nouveau produit réfractaire fondu et coulé à forte teneur en zircone.

### Etat de la technique

Parmi les produits réfractaires, on distingue les produits fondus et coulés, bien connus pour la construction des fours de fusion du verre, et les produits frittés.

A la différence des produits frittés, les produits fondus et coulés comportent le plus souvent une phase vitreuse intergranulaire reliant des grains cristallisés. Les problèmes posés par les produits frittés et par les produits fondus et coulés, et les solutions techniques adoptées pour les résoudre, sont donc généralement différents. Une composition mise au point pour fabriquer un produit fritté n'est donc pas *a priori* utilisable telle quelle pour fabriquer un produit fondu et coulé, et réciproquement.

Les produits fondus et coulés, souvent appelés électrofondus, sont obtenus par fusion d'un mélange de matières premières appropriées dans un four à arc électrique ou par toute autre technique adaptée à ces produits. La matière en fusion est ensuite coulée dans un moule puis le produit obtenu subit un cycle de refroidissement contrôlé pour être amené à température ambiante sans fracturation. Cette opération est appelée « recuisson » par l'homme de l'art.

Parmi les produits fondus et coulés, les produits électrofondus à forte teneur en zircone, c'est-à-dire comportant plus de 85 % en poids de zircone (ZrO₂), sont réputés pour leur qualité de très grande résistance à la corrosion sans coloration du verre produit et sans génération de défauts.

Classiquement, les produits fondus et coulés à forte teneur en zircone comportent également de l'oxyde de sodium (Na₂O) pour éviter la formation de zircon à partir de la zircone et de la silice présentes dans le produit. La formation de zircon est en effet néfaste puisqu'elle s'accompagne d'une diminution de volume de l'ordre de 20 %, créant ainsi des contraintes mécaniques à l'origine de fissures.

Le produit ER-1195 produit et commercialisé par Saint-Gobain SEFPRO et couvert par le brevet EP-B-403 387 est aujourd'hui largement utilisé dans les fours de fusion du verre. Sa composition chimique comprend environ 94 % de zircone, 4 à 5 % de silice, environ 1 % d'alumine, 0,3 % d'oxyde de sodium et moins de 0,05 % en poids de P₂O₅. Elle est typique des produits à forte teneur en zircone utilisés pour les fours verriers.

FR 2 701 022 décrit des produits fondus et coulés à forte teneur en zircone qui contiennent 0,05 à 1,0 % en poids de P₂O₅ et 0,05 à 1,0 % en poids d'oxyde de bore B₂O₃. Ces produits présentent une résistivité électrique élevée. Cela permet avantageusement de stabiliser la consommation électrique lors de la fusion électrique du verre et surtout d'éviter tout problème de court circuit dans les produits réfractaires entraînant leur dégradation rapide. En effet, lors de la fusion électrique du verre une partie du courant électrique passe à travers les produits réfractaires. L'augmentation de la résistivité de ces produits réfractaires permet donc de réduire la quantité de courant électrique susceptible de les parcourir.

WO 2009 027610 décrit des produits fondus et coulés à forte teneur en zircone présentant une résistivité électrique élevée en présence d'au moins un oxyde choisi parmi Nb₂O₅ et Ta₂O₅ pour des teneurs en silice comprises entre 6 et 12 %.

WO 2007 099253 décrit des produits fondus et coulés à forte teneur en zircone présentant une résistivité électrique élevée en présence d'au moins un oxyde choisi parmi CrO₃, Nb₂O₅, MoO₃, Ta₂O₅ et WO₃. Ces produits contiennent moins de 1,5 % en poids de B₂O₃ pour des teneurs en alumine comprises entre 0,1 et 2,4 %.

WO 2005 068393 décrit des produits fondus et coulés à forte teneur en zircone présentant une résistivité électrique élevée tout en minimisant les teneurs en BaO, SrO, MgO, CaO, P₂O₅, Na₂O et K₂O. Ces produits contiennent 0,1 à 1,2 % en poids de B₂O₃ et entre 0,8 % et 2,5 % d'alumine. Ce document ne suggère par un ajout de Ta₂O₅ ou de B₂O₃.

JP 63 285173 décrit des produits fondus et coulés à forte teneur en zircone présentant une bonne résistivité électrique et une résistance à la fissuration pour des teneurs en silice inférieures à 6,5 %.

L'actuel développement de verres de très haute qualité, en particulier des verres pour écrans plats de type LCD, augmente les exigences pour les produits réfractaires des fours de fusion du verre. En particulier, il existe un besoin pour des produits réfractaires présentant une résistivité électrique améliorée tout en présentant une bonne résistance à la corrosion par le verre.

La présente invention vise à satisfaire ce besoin.

WO 2009 027610 divulgue un produit réfractaire fondu et coulé comportant en poids % :
- ZrO₂+HfO₂: > 85%
- siO₂: 6% à 12%
- Al₂O₃: 0,4 à 1%
- Y₂O₃: ≤ 0,2%
- un dopant choisi dans le groupe formé par Nb₂O₅, Ta₂O₅ et leurs mélanges, la quantité massique de Ta₂O₅ étant inférieure ou égale à 1,5% et/ou la quantité massique de Nb₂O₅ étant inférieure ou égale à 1,0%
- comportant en outre du B₂O₅, la teneur étant ≥ 0,2% et ≤ 1,0% (Rev. 12) ou ≥ 0,3% et ≤ 0,8%(Rev. 13).

WO 2008 113949 décrit un bloc réfractaire fondu, coulé et recuit comportant (en pourcentages massiques sur la base des oxydes), une teneur moyenne en zircone (ZrO₂ + HfO₂) de plus de 85%, une teneur en silice SiO₂ supérieure ou égale à 1%, et
- Y₂O₃ ≥ 0,5% et/ou Y₂O₃ ≤ 1,5% et/ou
- Na₂O + K₂O≤ 0,5%, et/ou
- B₂O₃ > 0,1% et/ou B₂O₃ ≤ 0,8%, et/ou
- Ta₂O₅ ≥ 0,8% et/ou Ta₂O₅ ≤ 1,5% et/ou
- Nb₂O₅ ≥ 0,4% et/ou Nb₂O₅ ≤ 1,5%, et/ou
- Al₂O₃ = 0,5 - 1,5% et, de préférence
- Fe₂O₃ + TiO₂ ≤ 0,55% et P₂O₅ < 0,05%

### Résumé de l'invention

Plus particulièrement, l'invention concerne un produit réfractaire fondu et coulé comportant, en pourcentages massiques sur la base des oxydes et pour un total de 100 % des oxydes
ZrO₂ + HfO₂ : complément à 100 % ;
4,0 % < SiO₂ < 6,5 %
Al₂O₃ ≤ 0,75 %
0,2 % < B₂O₃ < 1,5 %
0,3 % < Ta₂O₅ < 1,5 %
Nb₂O₅ < 1,5%, de préférence Ta₂O₅ + Nb₂O₅ < 1,4% ;
Na₂O + K₂O < 0,2%
BaO < 0,2%
P₂O₆ < 0,15%
Fe₂O₃ + TiO₂ < 0,55%
autres espèces oxydes : < 1,5%
le rapport « A/B » des teneurs massiques Al₂O₃ / B₂O₃ étant inférieur à 1,50.

Comme on le verra plus loin, de manière surprenante, les inventeurs ont découvert que cette composition permet au produit réfractaire selon l'invention de présenter une bonne résistivité électrique, pour des teneurs en silice inférieures à 6,5 % permettant de maintenir une bonne résistance à la corrosion et une teneur en Nb₂O₅ et Ta₂O₅ limitée, permettant notamment de limiter les coûts.

Un produit réfractaire selon l'invention peut alors encore comporter une ou plusieurs des caractéristiques optionnelles suivantes :
- Le rapport A/B des teneurs massiques Al₂O₃ B₂O₃ est inférieur ou égal à 1,40, de préférence inférieur à 1,30, voire inférieur à 1,20, voire inférieur à 1,10.
- Le rapport A/B des teneurs massiques Al₂O₃ / B₂O₃ est supérieur à 0,10, voire supérieur à 0,20, voire supérieur à 0,30.
- La teneur massique en ZrO₂ + HfO₂ est inférieure à 95,5%, voire inférieure à 95,0%, voire inférieure à 94,0% et/ou supérieure à 87,0%, supérieure à 90,0%, supérieure à 91,0%, voire supérieur à 92,0%.
- Le rapport Al₂O₃/SiO₂ est inférieur à 0,20 de préférence inférieur à 0,15, de préférence inférieur à 0,13, de préférence inférieur à 0,10.
- La teneur massique de silice SiO₂ est inférieure à 6,3 %, inférieure à 6,0 %, voire inférieure à 5,8 % ou inférieure à 5,6 %.
- La teneur massique de silice SiO₂ est supérieure à 4,2 %, voire supérieure à 4,5 %, voire supérieure à 4,8 %, voire supérieure à 5,0 %, ou supérieure à 5,2 %.
- La teneur massique d'alumine Al₂O₃ est inférieure à 0,7 %, inférieure à 0,6 %, voire inférieure à 0,55 %, voire inférieure à 0,5 %.
- L'alumine Al₂O₃ n'est présente qu'à titre d'impuretés.
- La teneur massique Al₂O₃ est supérieure à 0,2 %, voire supérieure à 0,25 %.
- La teneur massique B₂O₃ est supérieure à 0,25 %, supérieure à 0,30 %, supérieure à 0,35 %, voire supérieure à 0,4 %.
- La teneur massique B₂O₃ est inférieure à 1,2 %, voire inférieure à 1,0 %, voire inférieure à 0,80 %, inférieure à 0,7 %, inférieure à 0,6 %, voire inférieure à 0,55 %.
- La teneur massique totale en Nb₂O₅ + Ta₂O₅ est supérieure à 0,4 %, de préférence supérieure à 0,5 %, de préférence supérieure à 0,6 % et/ou inférieure à 1,3 %, voire inférieure à 1,2 %.
- La teneur massique Ta₂O₅ est supérieure à 0,4 %, de préférence supérieure à 0,5 %, de préférence supérieure à 0,6 % et/ou inférieure à 1,4 %, voire inférieure à 1,3 %, voire inférieure à 1,2.
- La teneur massique Nb₂O₅ est inférieure à 1,0 %, inférieure à 0,6 %, voire inférieure à 0,40 %.
- Le rapport massique ZrO₂ / (Nb₂O₅+Ta₂O₅) est supérieur à 50, supérieur à 80 et/ou inférieur à 200, inférieur à 150.
- La teneur massique (Na₂O+K₂O) est inférieure à 0,1 %, voire inférieure à 0,05 %.
- La teneur massique P₂O₅ est inférieure à 0,05 %.
- Les oxydes de fer et/ou de titane et/ou de calcium et/ou de strontium et/ou de baryum et/ou de magnésium et/ou de zinc et/ou de phosphore ne sont présents qu'à titre d'impuretés.
- La teneur massique en oxydes de fer et/ou de titane, Fe₂O₃ + TiO₂, est inférieure à 0,4 %, de préférence inférieure à 0,3 %, de préférence inférieure à 0,2 %.
- La teneur massique d'oxyde de calcium et/ou de strontium et/ou baryum et/ou de magnésium et/ou de zinc est inférieure à 0,15 %, de préférence inférieure à 0,1 %.
- La teneur massique totale en oxydes de calcium et/ou de strontium et/ou baryum et/ou de magnésium et/ou de zinc, CaO + SrO + BaO + MgO + ZnO, est inférieure à 0,3 %, de préférence inférieure à 0,2 %, inférieure à 0,1%, inférieure à 0,05%.
- La teneur massique totale des « autres espèces oxydes » est inférieure à 1,0 %, inférieure à 0,6 %, inférieure à 0,5 %, voire inférieure à 0,3 %.
- Les « autres espèces oxydes » ne sont constituées que par des impuretés et la teneur massique totale des « autres espèces oxydes » est inférieure à 0,6 %, inférieure à 0,5 %, voire inférieure à 0,3 %.
- La teneur massique en oxyde d'yttrium Y₂O₃ est inférieure à 1 %, de préférence inférieure à 0,5 %, de préférence encore inférieure à 0,4 %, voire inférieure à 0,3 %, voire inférieure à 0,25 %. Dans un mode de réalisation, Y₂O₃ < 0,15 %, voire Y₂O₃ < 0,05 %, ou la teneur en Y₂O₃ est nulle.

Suivant un mode de réalisation particulier, l'invention propose un produit réfractaire fondu et coulé comportant, en pourcentages massiques sur la base des oxydes:
92,0 % < ZrO₂ + HfO₂ < 94,7 %
4,5 % < SiO₂ < 6,5 %
Al₂O₃ < 0,7 %
0,3 % < B₂O₃ < 0,6 %
0,5 % < Ta₂O₅ < 1,4 %
Na₂O + K₂O < 0,05 %
CaO + SrO + MgO + ZnO + BaO < 0,2 %
autres espèces oxydes (autres que ZrO₂, HfO₂, SiO₂, Al₂O₃, B₂O₃, Ta₂O₅, Na₂O,
K₂O, CaO, SrO, MgO, ZnO, et BaO) : complément à 100 %,
le rapport « A/B » des teneurs massiques Al₂O₃ / B₂O₃ étant inférieur ou égal à 1,2.

De préférence, les autres espèces oxydes représentent moins de 2,5 %, moins de 2,0%, moins de 1,5%, moins de 1,0%, moins de 0,5%, voire moins de 0,3%.

Le procédé de fabrication d'un produit réfractaire selon l'invention peut comprendre les étapes successives suivantes :
a) mélange de matières premières de manière à former une charge de départ,
b) fusion de ladite charge de départ jusqu'à obtention d'une matière en fusion,
c) coulage et solidification de ladite matière en fusion, par refroidissement, de manière à obtenir un produit réfractaire,
ce procédé étant remarquable en ce que lesdites matières premières sont choisies de manière que ledit produit réfractaire soit conforme à l'invention.

De préférence, on ajoute systématiquement et méthodiquement les oxydes pour lesquels une teneur minimale est nécessaire, notamment ZrO₂, SiO₂, B₂O₃, Ta₂O₅ ou des précurseurs de ces oxydes. En particulier, on n'ajoute pas Y₂O₃. De préférence, on tient compte des teneurs de ces oxydes dans les sources des autres oxydes où ils sont classiquement considérés comme des impuretés.

De préférence, le refroidissement est contrôlé, de préférence de manière à être effectué à une vitesse inférieure à 20°C par heure, de préférence à la vitesse d'environ 10°C par heure.

L'invention concerne aussi un four de fusion de verre comportant un produit réfractaire selon l'invention, ou un produit réfractaire fabriqué ou susceptible d'être fabriqué suivant un procédé selon l'invention, en particulier dans une région destinée à être en contact avec le verre en fusion. Dans un four selon l'invention, le produit réfractaire peut avantageusement faire partie d'une cuve de préparation de verre par fusion, notamment par fusion électrique, où il est susceptible d'entrer en contact avec du verre en fusion à une température supérieure à 1200°C.

### Définitions

Les teneurs massiques en oxydes se rapportent aux teneurs globales pour chacun des éléments chimiques correspondants, exprimées sous la forme de l'oxyde le plus stable, selon la convention habituelle de l'industrie ; sont donc inclus les sous-oxydes et éventuellement nitrures, oxynitrures, carbures, oxycarbures, carbonitrures, ou même les espèces métalliques des éléments susmentionnés.

Une « matière en fusion » est une masse liquide qui, pour conserver sa forme, doit être contenue dans un récipient. Elle peut contenir quelques particules solides, mais en quantité insuffisante pour qu'elles puissent structurer ladite masse.

Par « impuretés», on entend les constituants inévitables, introduits involontairement et nécessairement avec les matières premières ou résultant de réactions avec ces constituants. Les impuretés ne sont pas des constituants nécessaires, mais seulement tolérés. Par exemple, les composés faisant partie du groupe des oxydes, nitrures, oxynitrures, carbures, oxycarbures, carbonitrures et espèces métalliques de fer, titane, vanadium et chrome sont des impuretés.

Sauf mention contraire, toutes les teneurs en oxydes dans les produits décrits et revendiqués sont des pourcentages massiques sur la base des oxydes.

### Description détaillée de l'invention

Dans un produit fondu et coulé selon l'invention, la forte teneur en zircone ZrO₂ permet de répondre aux exigences de haute résistance à la corrosion sans coloration du verre produit ni génération de défauts nuisibles à la qualité de ce verre.

Dans un produit obtenu par fusion, HfO₂ n'est pas chimiquement dissociable de ZrO₂. Dans la composition chimique d'un tel produit, ZrO₂+HfO₂ désigne donc la teneur totale de ces deux oxydes. Cependant, selon la présente invention, HfO₂ n'est pas ajouté volontairement dans la charge de départ. HfO₂ ne désigne donc que les traces d'oxyde d'hafnium, cet oxyde étant toujours naturellement présent dans les sources de zircone à des teneurs généralement inférieures à 2 %. Par souci de clarté, on peut donc désigner indifféremment la teneur en zircone et en traces d'oxyde d'hafnium par ZrO₂+HfO₂ ou par ZrO₂, ou encore par « teneur en zircone ».

La teneur en oxyde d'hafnium, HfO₂ dans un produit selon l'invention est inférieure à 5 %, généralement inférieure à 2 %.

La présence de silice SiO₂ permet notamment la formation d'une phase vitreuse intergranulaire apte à accommoder de manière efficace les variations de volume de la zircone lors de sa transformation allotropique réversible, c'est-à-dire lors du passage de la phase monoclinique à la phase tétragonale.

En revanche, l'ajout de silice doit être limité pour obtenir une résistance à la corrosion élevée. De plus, une trop forte teneur en silice pourrait générer des défauts dans le verre par lâcher de pierres (morceaux de produit réfractaire résultant d'une perte de cohésion du produit), ce qui est considéré comme un mauvais comportement à l'application.

La présence d'alumine favorise la formation d'une phase vitreuse stable et améliore la coulabilité des produits dans le moule. Une teneur excessive entraîne une instabilité de la phase vitreuse (formation de cristaux), ce qui a un impact négatif sur la faisabilité, en particulier en présence d'oxyde de bore. La teneur massique en alumine doit donc rester limitée.

La présence d'une teneur massique de B₂O₃ dans une proportion telle que le rapport A/B des teneurs massiques Al₂O₃ / B₂O₃ soit inférieur à 1,50 permet d'augmenter les résistivités électriques.

Les oxydes Ta₂O₅ et Nb₂O₅ ont un effet favorable sur la résistivité électrique. La teneur massique Ta₂O₅ doit en particulier être supérieure à 0,3 %.

Dans un produit selon l'invention, on considère que les oxydes Na₂O et K₂O ont des effets similaires.

Les oxydes Na₂O et K₂O ont un effet défavorable sur la résistivité électrique. La teneur massique de Na₂O+K₂O doit donc être inférieure à 0,2 %.

Selon l'invention, la teneur massique de Fe₂O₃ + TiO₂ est inférieure à 0,55 % et celle de P₂O₅ est inférieure à 0,15 %, de préférence inférieure à 0,10 %, de préférence encore inférieure à 0,05 %. En effet, ces oxydes sont connus pour être néfastes et leur teneur doit être de préférence limitée à des traces introduites à titre d'impuretés avec les matières premières.

Sauf indication contraire, les « autres espèces oxydes » sont les espèces qui ne sont pas listées ci-dessus, à savoir les espèces autres que ZrO₂, HfO₂, SiO₂, Al₂O₃, B₂O₃, Ta₂O₅, Nb₂O₅, Na₂O, K₂O, BaO, P₂O₅, Fe₂O₃ et TiO₂. Dans un mode de réalisation, les « autres espèces oxydes » sont limitées à des espèces dont la présence n'est pas particulièrement souhaitée et qui sont généralement présentes à titre d'impuretés dans les matières premières.

Classiquement, dans un produit fondu et coulé, les oxydes représentent plus de 98,5 %, plus de 99 %, voire sensiblement 100 % de la masse du produit. Il en est de même dans un produit selon l'invention.

Un produit selon l'invention peut être classiquement fabriqué suivant les étapes a) à c) décrites ci-dessous :
a) mélange de matières premières de manière à former une charge de départ,
b) fusion de ladite charge de départ jusqu'à obtention d'une matière en fusion,
c) solidification de ladite matière en fusion, par refroidissement, de manière à obtenir un produit réfractaire selon l'invention.

A l'étape a), les matières premières sont choisies de manière à garantir les teneurs en oxydes dans le produit fini.

A l'étape b), la fusion est de préférence réalisée grâce à l'action combinée d'un arc électrique assez long, ne produisant pas de réduction, et d'un brassage favorisant la réoxydation des produits.

Pour minimiser la formation de nodules d'aspect métallique et éviter la formation de fentes ou fendillements dans le produit final, il est préférable d'opérer la fusion dans des conditions oxydantes.

Préférentiellement on utilise le procédé de fusion à l'arc long décrit dans le brevet français n° 1 208 577 et ses additions n° 75893 et 82310.

Ce procédé consiste à utiliser un four à arc électrique dont l'arc jaillit entre la charge et au moins une électrode écartée de cette charge et à régler la longueur de l'arc pour que son action réductrice soit réduite au minimum, tout en maintenant une atmosphère oxydante au-dessus du bain en fusion et en brassant ledit bain, soit par l'action de l'arc lui-même, soit en faisant barboter dans le bain un gaz oxydant (air ou oxygène, par exemple) ou encore en ajoutant au bain des substances dégageant de l'oxygène telles que des peroxydes ou des nitrates.

La fusion peut en particulier s'opérer à une température supérieure à 2300°C, de préférence comprise entre 2400°C et 2500°C.

A l'étape c), le refroidissement est de préférence effectué à une vitesse inférieure à 20°C par heure, de préférence à la vitesse d'environ 10°C par heure.

Un produit de l'invention ainsi fabriqué est constitué de grains de zircone entourés par une phase vitreuse. La zircone peut être monoclinique pour plus de 80 %, plus de 90 %, plus de 99 % ou sensiblement 100 %, en pourcentage massique. La phase vitreuse peut comporter par exemple plus de 50 %, voire plus de 70 %, de silice, entre 5 % et 20 % de B₂O₃ et entre 1 % et 20 % d'alumine, en pourcentages massiques sur la base de la phase vitreuse. La silice, B₂O₃ et l'alumine peuvent représenter plus de 95 %, plus de 97 %, voire sensiblement 100 % de la masse de la phase vitreuse.

Tout procédé conventionnel de fabrication de produits fondus à base de zircone destinés à des applications dans des fours de fusion de verre peut être mis en oeuvre, pourvu que la composition de la charge de départ permette d'obtenir des produits présentant une composition conforme à celle d'un produit selon l'invention.

### Exemples

Les exemples non limitatifs suivants sont donnés dans le but d'illustrer l'invention.

Dans ces exemples, on a employé les matières premières suivantes :
- de la zircone contenant principalement, en moyenne massique, 98,5 % de ZrO₂ + HfO₂, 0,2 % de SiO₂ et 0,02 % de Na₂O,
- du sable de zircon à 33 % de silice,
- de l'oxyde de bore de pureté supérieure à 99 %,
- de l'oxyde de niobium et de l'oxyde de tantale de pureté supérieure à 99 %.

Les matières premières ont été fondues selon le procédé classique de fusion en four à arc puis la matière en fusion a été coulée pour obtenir des blocs de format 220 mm x 450 mm x 150 mm.

L'exemple 1 correspond au produit ER1195, commercialisé par Saint-Gobain SEFPRO, et constitue la référence.

Pour tous les produits obtenus, l'analyse cristallographique révèle des cristaux de zircone monoclinique entourés d'une phase vitreuse comportant typiquement plus de 70 % de silice. La totalité de la silice ainsi que des autres espèces oxydes à l'exception de la zircone se retrouve dans la phase vitreuse.

L'analyse chimique des produits obtenus est donnée dans le tableau 1 ; il s'agit d'une analyse chimique globale moyenne, donnée en pourcentages massiques.

Dans le tableau 1 suivant, * indique que l'exemple est en dehors de l'invention, une case vide correspond à une teneur inférieure ou égale à 0,05 % massique.

On a extrait sur les différents exemples de blocs réalisés des barreaux cylindriques de produit de 30 mm de diamètre et de 30 mm de hauteur. Ces barreaux ont été soumis à une différence de potentiel de 1 volt à une fréquence de 100 Hertz à respectivement 1500°C ou 1600°C pour réaliser des mesures de résistivité électrique, respectivement « R1500 » et « R1600 ».

**Tableau 1**

| | Compositions massiques (en pourcentage sur la base des oxydes) | | | | | | | | | |
|---|---|---|---|---|---|---|---|---|---|---|
| | ZrO₂ | SiO₂ | B₂O₃ | Al₂O₃ | Ta₂O₅ | Nb₂O₅ | Na₂O | A/B | R1500 (Ω.cm) | R1600 (Ω.cm) |
| 1* | Complément à 100 % | 4,0 | | 1,20 | | | 0,3 | | 70 | |
| 2* | | 4,5 | 0,40 | 0,80 | | | | 2,00 | 110 | 80 |
| 3* | | 4,1 | 0,40 | 0,61 | | | | 1,53 | 107 | 81 |
| 4* | | 4,9 | 0,36 | 0,74 | | 0,69 | | 2,06 | 181 | 134 |
| 5* | | 5,0 | 0,49 | 0,92 | 0,99 | | | 1,88 | 190 | 135 |
| 6* | | 5,1 | 0,38 | 0,83 | 0,56 | 0,40 | | 2,18 | 197 | 140 |
| 7 | | 5,0 | 0,52 | 0,75 | 1,03 | | | 1,44 | 280 | 190 |
| 8 | | 5,1 | 0,50 | 0,52 | 1,02 | | | 1,04 | 450 | 275 |
| 9 | | 5,3 | 0,27 | 0,26 | 0,71 | | | 0,96 | 453 | 283 |
| 10 | | 6,0 | 0,49 | 0,51 | 1,02 | | | 1,04 | 410 | 250 |
| 11 | | 4,6 | 0,47 | 0,54 | 1,00 | | | 1,15 | 340 | 212 |
| 12 | | 4,8 | 0,36 | 0,44 | 0,86 | | | 1,22 | 254 | 165 |
| 13* | | 4,9 | 0,36 | 0,56 | 0,98 | | | 1,56 | 225 | 141 |

Les résultats montrent que les produits de l'invention testés présentent une résistivité électrique améliorée.

Une comparaison des exemples 5* (ou 6*) puis 13* avec l'exemple 7, et plus encore une comparaison des exemples 5* (ou 6*) puis 13* avec l'exemple 8 montre, à teneur en silice sensiblement constante et à teneurs totales en dopant sensiblement identiques, l'effet très positif d'une diminution du rapport A/B. Il en est de même en comparant l'exemple 4* avec l'exemple 12.

Les exemples 7 et 8 démontrent, à teneur en silice sensiblement constante, l'effet très positif d'une diminution du rapport A/B entre 1,44 et 1,04 et son effet synergique avec le dopant.

Une comparaison des exemples 8 et 9 ou des exemples 9 et 10 montre que les performances peuvent être maintenues si le rapport A/B est maintenu, en dépit d'une diminution des teneurs en B₂O₃, Al₂O₃, et Ta₂O₅.

Enfin, des mesures ont montré que la résistance à la corrosion par du verre en fusion des produits de l'invention est équivalente à celle de l'exemple 1* de référence.

Bien entendu, la présente invention n'est pas limitée aux modes de réalisation des exemples, fournis à des fins illustratives.

## Revendications

1. Produit réfractaire fondu et coulé comportant, en pourcentages massiques sur la base des oxydes et pour un total de 100 % des oxydes
ZrO₂ + HfO₂ : complément à 100 %
4,0 % < SiO₂ < 6,5 %
Al₂O₃ ≤ 0,75 %
0,2 % ≤ B₂O₃ < 1,5 %
0,3 % < Ta₂O₅
Nb₂O₅ + Ta₂O₅ < 1,4 %
Na₂O + K₂O < 0,2 %
BaO < 0,2%
P₂O₅ < 0,15%
Fe₂O₃ + TiO₂ < 0,55%
autres espèces oxydes : < 1,5%
le rapport « A/B » des teneurs massiques Al₂O₃ / B₂O₃ étant inférieur à 1,50.

2. Produit selon la revendication précédente, dans lequel le rapport A/B est inférieur à 1,40.

3. Produit selon l'une quelconque des revendications précédentes, dans lequel Nb₂O₅ + Ta₂O₅ > 0,5 %.

4. Produit selon l'une quelconque des revendications précédentes, dans lequel Nb₂O₅ + Ta₂O₅ < 1,2 %.

5. Produit selon l'une quelconque des revendications précédentes, dans lequel la teneur massique de silice SiO₂ est inférieure à 6,0 %.

6. Produit selon l'une quelconque des revendications précédentes, dans lequel la teneur massique de silice SiO₂ est supérieure à 4,5 %.

7. Produit selon l'une quelconque des revendications précédentes, dans lequel la teneur massique de silice SiO₂ est supérieure à 4,8 %.

8. Produit selon l'une quelconque des revendications précédentes, dans lequel la teneur massique en B₂O₃ est inférieure à 1,0 %.

9. Produit selon l'une quelconque des revendications précédentes, dans lequel la teneur massique Al₂O₃ est inférieure à 0,7 %.

10. Produit selon l'une quelconque des revendications précédentes, dans lequel la teneur massique Al₂O₃ est inférieure à 0,6 %.

11. Produit selon l'une quelconque des revendications précédentes, dans lequel la teneur massique Na₂O + K₂O est inférieure à 0,1 %.

12. Produit selon l'une quelconque des revendications précédentes, comportant, en pourcentages massiques sur la base des oxydes:
92,0 % < ZrO₂ + HfO₂ < 94,7 %
4,5 % < SiO₂ < 6,5 %
Al₂O₃ < 0,7 %
0,3 % < B₂O₃ < 0,6 %
0,5 % Ta₂O₅
Nb₂O₅ + Ta₂O₅ < 1,4 %
Na₂O + K₂0 < 0,05 %
CaO + SrO + MgO + ZnO + BaO < 0,2 %
espèces oxydes autres que ZrO₂, HfO₂, SiO₂, Al₂O₃, B₂O₃, Ta₂O₅, Na₂O, K₂O, CaO, SrO, MgO, ZnO, et BaO : complément à 100 %,
le rapport « A/B » des teneurs massiques Al₂O₃ / B₂O₃ étant inférieur ou égal à 1,2.

13. Produit selon l'une quelconque des revendications précédentes, dans lequel la teneur massique Y₂O₃ est inférieure à 0,25 %.

14. Produit selon l'une quelconque des revendications précédentes, dans lequel la teneur massique en oxydes de fer et/ou de titane, Fe₂O₃+TiO₂, est inférieure à 0,4 %, la teneur massique en P₂O₅ est inférieure à 0,05 %, la teneur massique totale en oxydes de calcium et/ou de strontium et/ou de baryum et/ou de magnésium et/ou de zinc, CaO + SrO + BaO + MgO + ZnO, est inférieure à 0,3 %, et la teneur massique totale des « autres espèces oxydes » est inférieure à 0,6 %.

15. Four de fusion de verre comportant un produit selon l'une quelconque des revendications précédentes dans une région destinée à être en contact avec du verre en fusion.

## Patentansprüche

1. Feuerfestprodukt, welches geschmolzen und gegossen ist, bestehend in Massenprozenten auf der Basis von Oxyden und für eine Gesamtheit von 100% an Oxyden aus:
ZrO₂ + HfO₂: Komplement zu 100%
4,0% < SiO₂ < 6,5%
Al₂O₃ ≤ 0,75%
0,2% < B₂O₃ < 1,5%
0,3% < Ta₂O₅
Nb₂O₅ + Ta₂O₅ < 1,4%
Na₂O + K₂O < 0,2%
BaO < 0,2%
P₂O₅ < 0,15%
Fe₂O₃ + TiO₂ < 0,55%
andere Arten von Oxyden: < 1,5%,
wobei das Verhältnis "A/B" der Massengehalte Al₂O₃/ B₂O₃ kleiner als 1,50 beträgt.

2. Produkt nach dem vorhergehenden Anspruch, in welchem das Verhältnis A/B kleiner als 1,40 ist.

3. Produkt nach einem der vorhergehenden Ansprüche, in welchem Nb₂O₅ + Ta₂O₅ > 0,5% ist.

4. Produkt nach einem der vorhergehenden Ansprüche, in welchem Nb₂O₅ + Ta₂O₅ < 1,2% ist.

5. Produkt nach einem der vorhergehenden Ansprüche, in welchem der Massengehalt an Siliciumoxyd SiO₂ kleiner als 6,0% ist.

6. Produkt nach einem der vorhergehenden Ansprüche, in welchem der Massengehalt an Siliciumoxyd SiO₂ größer als 4,5% ist.

7. Produkt nach einem der vorhergehenden Ansprüche, in welchem der Massengehalt an Siliciumoxyd SiO₂ größer als 4,8% ist.

8. Produkt nach einem der vorhergehenden Ansprüche, in welchem der Massengehalt an B₂O₃ kleiner als 1,0% ist.

9. Produkt nach einem der vorhergehenden Ansprüche, in welchem der Massengehalt an Al₂O₃ kleiner als 0,7% ist.

10. Produkt nach einem der vorhergehenden Ansprüche, in welchem der Massengehalt an Al₂O₃ kleiner als 0,6% ist.

11. Produkt nach einem der vorhergehenden Ansprüche, in welchem der Massengehalt an Na₂O + K₂O kleiner als 0,1 % ist.

12. Produkt nach einem der vorhergehenden Ansprüche, welches in Massenprozent auf der Basis von Oxyden aufweist:
92,0% < ZrO₂ + HfO₂ < 94,7%
4,5% < SiO₂ < 6,5%
Al₂O₃ < 0,7%
0,3% < B₂O₃ < 0,6%
0,5% < Ta₂O₅
Nb₂O₅ + Ta₂O₅ < 1,4%
Na₂O + K₂O < 0,05%
CaO + SrO + MgO + ZnO + BaO < 0,2%
andere Arten von Oxyden ausgenommen ZrO₂, HfO₂, SiO₂, Al₂O₃, B₂O₃, Ta₂O₅, Na₂O, K₂O, CaO, SrO, MgO, ZnO und BaO: als Komplement zu 100%, wobei das Verhältnis "A/B" der Massengehalte von Al₂O₃/ B₂O₃ kleiner oder gleich 1,2 ist.

13. Produkt nach einem der vorhergehenden Ansprüche, in welchem der Massengehalt an Y₂O₃ kleiner als 0,25% ist.

14. Produkt nach einem der vorhergehenden Ansprüche, in welchem der Massengehalt an Oxyden von Eisen und/oder Titan, Fe₂O₃ + TiO₂ kleiner als 0,4% ist, der Massengehalt an P₂O₅ kleiner als 0,05% ist, der Gesamtmassengehalt an Oxyden von Kalzium und/oder Strontium und/oder Barium und/oder Magnesium und/oder Zink, CaO + SrO + BaO + MgO + ZnO kleiner als 0,3% ist und der Gesamtmassengehalt der "anderen Oxydarten" kleiner als 0,6% ist.

15. Glasschmelzofen, welcher ein Produkt nach einem der vorhergehenden Ansprüche in einem Bereich, welcher bestimmt ist in Kontakt mit dem schmelzenden Glas zu sein, aufweist.

## Claims

1. A fused cast refractory product comprising, in percentages by weight based on the oxides and for a total of 100% of the oxides:
ZrO₂ + HfO₂: complement to 100%
4.0% < SiO₂ < 6.5%
Al₂O₃ ≤ 0.75%
0.2% < B₂O₃ < 1.5%
0.3% < Ta₂O₅
Nb₂O₅+ Ta₂O₅ <1.4%
Na₂O + K₂O < 0.2%
BaO < 0.2%
P₂O₅ < 0.15%
Fe₂O₃ + TiO₂ < 0.55%
other oxide species: < 1.5%
the ratio "A/B" of the contents by weight Al₂O₃ / B₂O₃ being less than 1.50.

2. The product as claimed in the preceding claim, wherein the ratio A/B is less than 1.40.

3. The product as claimed in any one of the preceding claims, wherein Nb₂O₅ + Ta₂O₅ > 0.5%.

4. The product as claimed in any one of the preceding claims, wherein Nb₂O₅ + Ta₂O₅ < 1.2%.

5. The product as claimed in any one of the preceding claims, wherein the content by weight of silica SiO₂ is less than 6.0%.

6. The product as claimed in any one of the preceding claims, wherein the content by weight of silica SiO₂ is greater than 4.5%.

7. The product as claimed in any one of the preceding claims, wherein the content by weight of silica SiO₂ is greater than 4.8%.

8. The product as claimed in any one of the preceding claims, wherein the content by weight of B₂O₃ is less than 1.0%.

9. The product as claimed in any one of the preceding claims, wherein the content by weight of Al₂O₃ is less than 0.7%.

10. The product as claimed in any one of the preceding claims, wherein the content by weight of Al₂O₃ is less than 0.6%.

11. The product as claimed in any one of the preceding claims, wherein the content by weight of Na₂O + K₂O is less than 0.1 %.

12. The product as claimed in any one of the preceding claims, comprising, in percentages by weight based on the oxides:
92.0% < ZrO₂ + HfO₂ < 94.7%
4.5% < SiO₂ < 6.5%
Al₂O₃ < 0.7%
0.3% < B₂O₃ < 0.6%
0.5% < Ta₂O₅
Nb₂O₅ + Ta₂O₅ < 1.4%
Na₂O + K₂O < 0.05%
CaO + SrO + MgO + ZnO + BaO < 0.2%
oxide species other than ZrO₂, HfO₂, SiO₂, Al₂O₃, B₂O₃, Ta₂O₅, Na₂O, K₂O, CaO, SrO, MgO, ZnO, and BaO: complement to 100%,
the ratio "A/B" of the contents by weight Al₂O₃ / B₂O₃ being less than or equal to 1.2.

13. The product as claimed in any one of the preceding claims, wherein the content by weight of Y₂O₃ is less than 0.25%.

14. The product as claimed in any one of the preceding claims, wherein the content by weight of oxides of iron and/or of titanium, Fe₂O₃+TiO₂, is less than 0.4%, the content by weight of P₂O₅ is less than 0.05%, the total content by weight of oxides of calcium and/or of strontium and/or of barium and/or of magnesium and/or of zinc, CaO + SrO + BaO + MgO + ZnO, is less than 0.3%, and the total content by weight of "other oxide species" is less than 0.6%.

15. A glass melting furnace comprising a product as claimed in any one of the preceding claims in a region intended to be in contact with molten glass.
